# EUROPÄISCHE PATENTANMELDUNG

(11) **EP 3 162 193 A1**
(43) Veröffentlichungstag der Anmeldung: **03.05.2017**
(21) Anmeldenummer: 16168553.2
(22) Anmeldetag: 06.05.2016
(51) Int. Cl.: A01G 13/10

(54) **PFLANZENSCHUTZVORRICHTUNG**

(71) Anmelder: Gugger, Roger, 4102 Binningen (CH)
(72) Erfinder: Gugger, Roger, 4102 Binningen (CH)
(74) Vertreter: AMMANN PATENTANWÄLTE AG BERN

(57) **Zusammenfassung**

Eine Pflanzenschutzvorrichtung (1) zum Einsetzen in eine Pflanzfläche weist eine generelle konkave Form an, zum Beispiel in der Art eines Trogs oder eines an einer Seite offenen Quaders, in einer langen Form auch einer langgestreckten, prismatischen Säule, der eine Seitenfläche entfernt wurde. Durch Verwendung eines Materials für die Wände mit Löchern mit einem Durchmesser von maximal 1,0 mm in hinreichend grosser Anzahl wird einerseits das Eindringen von kleinen, in der Erde befindlichen Schädlingen wie Erdkrebsen, Engerlingen und Maulwurfsgrillen behindert, andererseits aber der Stoffaustausch mit der Umgebung gewährleistet.

## Beschreibung

Die vorliegende Erfindung bezieht sich auf eine Pflanzenschutzvorrichtung gemäss Oberbegriff des Anspruchs 1.

Eine Möglichkeit, Pflanzen vor Schädlingen zu schützen, besteht darin, geeignete mechanische Abwehrvorrichtungen einzusetzen. Die bekannten Massnahmen richten sich dabei gegen Wühlmäuse, Maulwürfe, Schnecken und andere Schädlinge, die sich oberirdisch oder unterirdisch vorwärts bewegen. Eine derartige Vorrichtung ist zum Beispiel aus der deutschen Gebrauchsmusterschrift DE-U-20 2006 007 641 bekannt. Es handelt sich dabei um einen kastenförmigen Pflanzbehälter aus einem gitterartigen Material. Der Behälter dient der Vermeidung von Verbissschäden durch Wühlmäuse oder Schermäuse. Der Behälter wird als Zuschnitt geliefert und vor Ort zur gebrauchsfähigen Form gefaltet bzw. gebogen. Ein Deckel dient dazu, ein Eindringen der Schädlinge von oben in den Pflanzbehälter zu vermeiden. Insgesamt hat dieser Pflanzenschutzbehälter beispielsweise die Form eines flachen Quaders.

Nicht berücksichtigt bei den vorbekannten mechanischen Pflanzenschutzvorrichtungen sind kleine bis mit blossem Auge schwer erkennbare, unterirdische Schädlinge wie Erdkrebse, Engerlinge, Maulwurfsgrillen usw. Wegen ihrer kleinen Körper können diese Schädlinge auch durch Lücken in vor Ort gefaltete Pflanzenschutzbehälter gemäss vorgenannter Gebrauchsmusterschrift zu den Pflanzen vordringen. Zu berücksichtigen ist weiterhin, dass Schädlinge von dieser Art sich auch an der Oberfläche fortbewegen können.

Ziel der vorliegenden Erfindung ist es daher, eine Pflanzenschutzvorrichtung anzugeben, die ein erweitertes Spektrum von unterirdischen Pflanzenschädlingen abwehrt.

Eine derartige Pflanzenschutzvorrichtung ist in Anspruch 1 angegeben. Die weiteren Ansprüche geben bevorzugte Ausführungsformen an.

Demgemäss ist ein wesentlicher Punkt der vorgeschlagenen Pflanzenschutzvorrichtung, dass ein korbähnlich vorgeformtes Behältnis vorgeschlagen wird, dessen Wände im Wesentlichen aus einem siebartigen Material bestehen wie zum Beispiel einem Draht- oder Filamentgeflecht oder einem plattenförmigen, mit Löchern oder Öffnungen versehenen Material. Durch die bevorzugte vorgefertigte Bereitstellung kann sichergestellt werden, dass keinerlei Lücken, Spalten oder andere Schwächen im Schutz bestehen, die den Schädlingen ein leichteres Eindringen als im sonstigen Material gestatten. Das Material an sich ist durch eine Obergrenze der Löcher bzw. der Maschenweite von maximal 1 mm, bevorzugt jedoch kleiner bis zu einer maximalen Maschenweite von 0,5 mm, gekennzeichnet.

Die Erfindung wird weiter anhand von bevorzugten Ausführungsbeispielen unter Bezugnahme auf die Figuren erläutert. Es zeigen:
- Fig. 1: Schematisierte Seitenansicht auf eine erste Ausführungsform eines Pflanzenschutzkorbs;
- Figg. 1a - e: Detailausschnitte gemäss I in Fig. 1 in starker Vergrösserung zur schematischen Illustrierung der Struktur des Materials der Pflanzenschutzvorrichtung;
- Fig. 2: Ansicht auf eine Schmalseite (von rechts oder links in Fig. 1) auf einen Pflanzenschutzkorb;
- Figg. 3 - 4: Ansichten wie Fig. 2 auf Varianten des Pflanzenschutzkorbs;
- Fig. 5: 3D-Ansicht einer mehrteiligen Ausführungsform eines Pflanzenschutzkorbs.

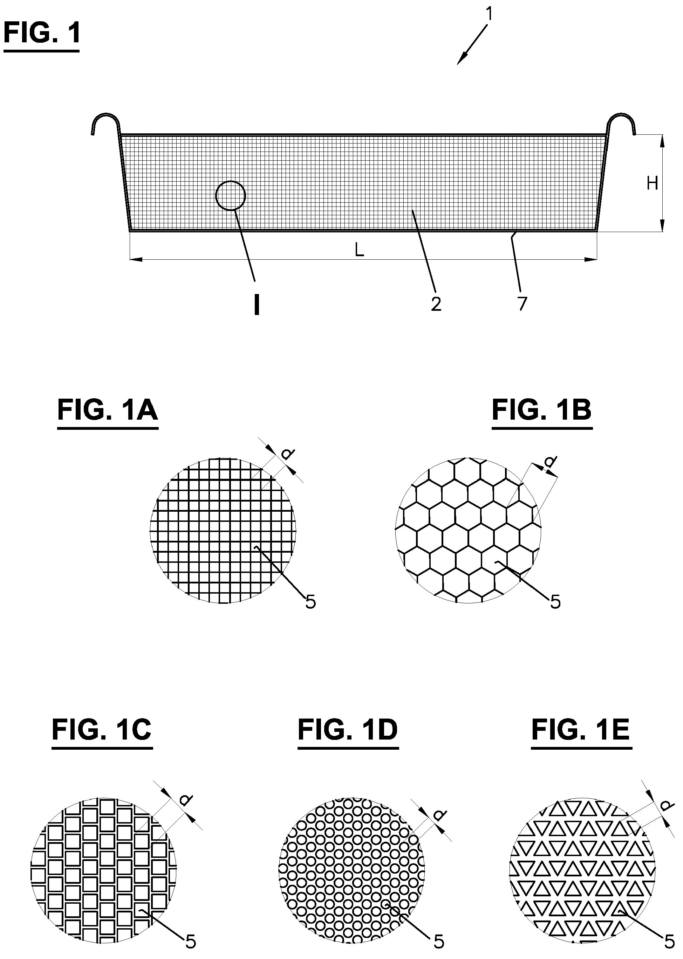

Wie in Figg. 1 bis 4 vereinfacht dargestellt, besteht die Pflanzenschutzvorrichtung 1 in einer bevorzugten Ausführungsform im Wesentlichen aus einem korbartigen Pflanzenschutzkorb 1 mit Seitenwänden 2 und Stirnwänden 4 aus einem Material, das sich durch eine Vielzahl von Öffnungen 5 auszeichnet. Die Öffnungen haben dabei eine Weite, d.h. maximale Distanz d diametral gegenüberliegender Punkte, von 1 mm, bevorzugt jedoch kleiner bis maximal 0,5 mm. Diese Angabe bezieht sich auf sämtliche Wände 2, 4 des Pflanzenschutzkorbes und insbesondere auch den nicht besonders dargestellten Boden 7, der im weiteren, soweit nicht anders angegeben, in dem Begriff "Wand" eingeschlossen ist.

Genauer ist ein solches Material für die Teile des Pflanzenschutzkorbs wirkungsvoll, die beim Einsatz unterhalb der Oberfläche des Pflanzsubstrats angeordnet sind. Oberhalb befindliche Abschnitte können aus anderem Material, insbesondere auch ohne Löcher, bestehen. Entsprechend der praktischen Anwendung, in der die Tiefe der Einbettung u.a. von den lokalen Gegebenheiten abhängt, kann sich das erfindungsspezifisch mit Öffnungen versehene Wandmaterial vom Boden aus bis mindestens 50 % der Höhe h, alternativ bis 60 %, 75 %, 80 %, 90 % der Höhe H oder auch bis auf einen technisch bedingten Rand über die gesamte Höhe H erstrecken, ggf. sogar z.B. in Form von Griffen usw. darüber hinaus.

Das Material der Wände 2, 4, 7 kann ein Geflecht sein (s. Figg. 1A, 1 B), denkbar ist aber auch ein plattenförmiges Material, das mit entsprechenden Löchern oder Durchgängen versehen ist. Als Material kommen infrage: Edelstahl, Kunststoffe, aber auch natürliche und künstliche Fasermaterialien. Ist das Material dabei langzeitbeständig gegenüber Umwelteinflüssen, wie zum Beispiel ein Edelstahlnetz, so eignet sich der Pflanzenschutzkorb zu einem Verbleib im Erdreich über mehrere Vegetationsperioden hinweg. Als Alternative kann auch verrottbares Material verwendet werden, sodass der Pflanzenschutzkorb nach Ablauf einer Vegetationsperiode verrottet und untergegraben oder untergepflügt werden kann.

Denkbar ist die Verwendung verschiedenen Materials für verschiedene Wände 2, 4, 7 und/oder innerhalb einer Wand.

Die Wand- und Bodenelemente 2, 4, 7 aus dem perforierten Material können an den Kanten an einer die Form bestimmenden Rahmenkonstruktion 6 befestigt sein. Die näherungsweise vertikalen Kanten 8 der Rahmenkonstruktion 6 laufen nach oben in Bügel 10 aus. Die Bügel 10 dienen der Handhabung bei Transport und Einsatz der Pflanzenschutzkörbe 1.

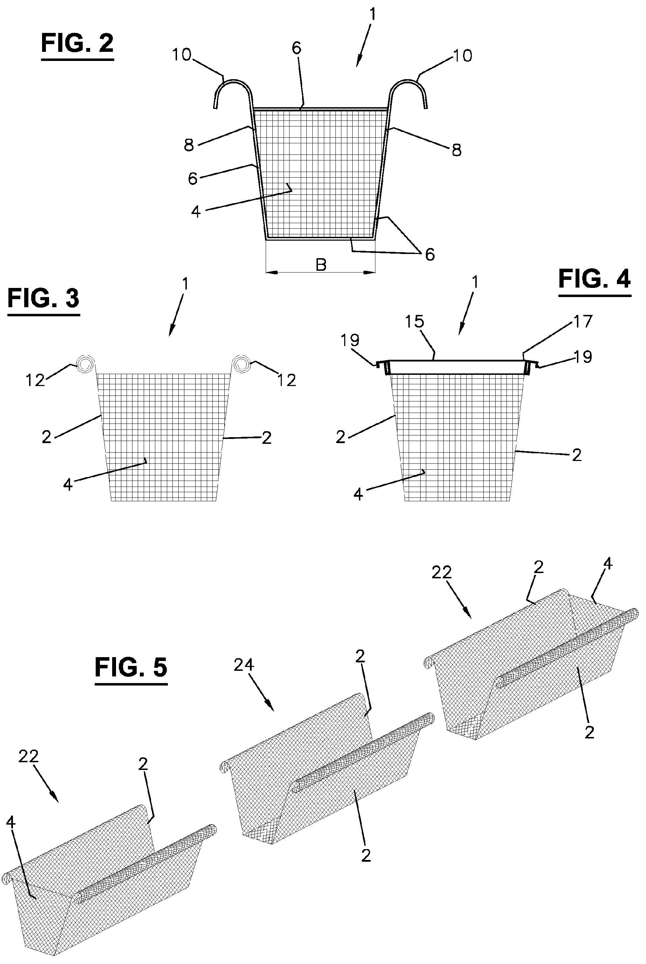

Fig. 3 zeigt eine Variante, bei der auf einen Rahmen 6 verzichtet wird, wobei jedoch das Wandmaterial der Wände 2, 4 und des Bodens 7 soweit eigenstabil sind, dass die Form des Pflanzenschutzkorbs 1 erhalten bleibt. Zur Handhabung ist das Material von gegenüberliegenden Wänden, hier der Seitenwände 4, nach oben verlängert und spiralig aufgewickelt, um Griffrohre 12 zu bilden.

Fig. 4 zeigt eine weitere Möglichkeit, bei der die Pflanzöffnung 15 durch einen die Pflanzöffnung 15 begrenzenden Öffnungsrahmen 17 vorgegeben ist. Am Öffnungsrahmen 17 sind die oberen Enden der Wände 2, 4 angebracht, sodass die Wände je nach ihrer Stabilität nach unten abstehen bzw. nach unten hängen. Selbstverständlich sind die Wände 2, 4 an den Kanten dicht miteinander verbunden und unten durch den Boden verschlossen. Der Öffnungsrahmen 17 ist an den Seiten mit Griffen 19 versehen. Je nach Stabilität des Materials der Seitenwände 2, 4 ist der Pflanzenschutzkorb 1 freistehend in einer Bodenvertiefung angeordnet, oder eine vorübergehende Stützkonstruktion, die zum Beispiel an den Griffen 19 eingreift, hält den Öffnungsrahmen 17 über der Erdoberfläche, sodass die Wände 2, 4 frei in eine Vertiefung im Boden hängen. Durch Einfüllen von Pflanzsubstrat in das Innere des Pflanzenschutzkorbs 1 und Aufschütten von aussen wird der Pflanzenschutzkorb 1 stabilisiert und die genannte, für sich nicht dargestellte Hilfskonstruktion kann entfernt werden. Denkbar ist in einer einfachen Form, auf die umgebende Oberfläche Stangen oder Leisten zu legen, auf denen die Griffe 19 aufliegen.

Eine einteilige Form eines Pflanzenschutzkorbs 1 aus Stabilitäts- und Gewichtsgründen ist nur bis zu einer bestimmten Maximalgrösse sinnvoll. Fig. 5 zeigt eine mehrteilige Ausführungsform, mit der zum Beispiel ausgedehnte Ackerfurchen oder Beetfurchen versehen werden können. Vorgegeben sind dabei zwei Endstücke 22. Es handelt sich dabei im Wesentlichen um Pflanzenschutzkörbe 1, bei denen eine Stirnwand 4 weggelassen ist. Dazu kommen je nach Länge der auszulegenden Furche kein, ein oder mehrere Verlängerungssegmente 24. Ein Verlängerungssegment 24 entspricht in der allgemeinen Form den Endteilen 22, es fehlen jedoch beide Stirnseiten 4. Minimal können direkt die beiden Endteile 22 mit ihren offenen Stirnseiten ineinandergesetzt werden mit hinreichender Überlappung, um die geforderte Dichtheit gegenüber den abzuwehrenden Schädlingen zu erreichen. Für grössere Längen werden entsprechend viele Verlängerungssegmente 24 jeweils auf die gleiche Art mit überlappenden Seitenwänden 2 ineinander bzw. mit den Endteilen 22 in einer Furche angeordnet.

Die maximale lichte Weite bzw. der maximale Abstand zwischen gegenüberliegenden Punkten von Passagen (Öffnungen) im perforierten Material eines Pflanzenschutzkorbes beträgt maximal 1 mm, weiter bevorzugt sind lichte Weiten von 0,8 mm, 0,7 mm oder auch 0,5 mm. Die Dichte der Löcher ist genügend hoch gewählt, um einen hinreichenden Wasser- und Luftaustausch mit der umgebenden Umgebung zu gestatten. Andererseits ist zwischen den Öffnungen hinreichend Material, insbesondere bei gelochten Blechen und ähnlichem, bzw. eine hinreichende Drahtstärke oder Fasermaterialstärke nötig, um dem Korb eine Stabilität zu verleihen, dass das Material mindestens den Belastungen beim Füllen mit Pflanzsubstrat und Einbetten in den umgebenden Boden standhält. Eine bevorzugte untere Grenze der Drahtstärke ist 0,5 mm, stärkere Drähte, sind denkbar, z.B. 0,7 mm, 1 mm oder 1,2 mm als untere Grenze des Durchmesser oder ungefähren Nennwert des Durchmessers.

Die Bereitstellung von Pflanzenschutzkörben in vorgefertigter Form ist bevorzugt, denkbar ist aber auch, den Pflanzenschutzkorb ungeformt zum Einsatzort zu bringen und dort, gegebenenfalls in Anpassung an die aktuelle Dimension der Vertiefung im Erdreich, in Form zu bringen. Insbesondere Geflechte bieten dabei den Vorteil, dass unter Hinnahme von Falten aus einem geschlossenen, flächigen Abschnitt ein wannenförmiges Gebilde geformt werden kann, das jedoch insgesamt aus einem durchgängigen Material ohne Lücken, Schlitzen oder anderen Schwächen besteht. Im Bereich der Öffnung zum Bepflanzen kann die Form durch einen Rahmen ähnlich der Ausführung gemäss Fig. 4 stabilisiert und fixiert werden.

Als Material kommen für die langzeitbeständigen Ausführungen u.a. Edelstahl oder verzinkter Stahl, aber auch Kunststoffe infrage. Für verrottende Ausführungen ist insbesondere an entsprechende Kunststoffe in Plattenform oder als Fasern bzw. Filamente zu denken. Natürliche Fasermaterialien sind ebenfalls denkbar, sind aber in der Regel ihrerseits Frass durch Schädlinge ausgesetzt, wodurch die Schutzwirkung hinfällig wird.

Die Form eines erfindungsgemässen Pflanzenschutzkorbs oder einer Pflanzenschutzvorrichtung kann in weitem Umfang frei gestaltet werden und ist nicht auf die in den Beispielen angegebene näherungsweise quaderförmige Form beschränkt. Denkbar sind insbesondere wannenförmige Ausbildungen oder Ausführungen, bei denen die Öffnungen gegenüber dem Inneren der Pflanzenschutzvorrichtung eine gewisse Verengung darstellt. Denkbare Masse der Pflanzenschutzvorrichtung in einer Dimension (Länge L, Breite B, Höhe H) beginnen bei ca. 15 cm. Eine Ausführung für eine einzelne Pflanze oder eine kleine Anzahl Pflanzen könnte zum Beispiel Masse von Länge L x Breite B 20 cm x 20 cm und eine Höhe H von 15 cm sein. In einer langgestreckten Form kann die Länge zum Beispiel 1 m sein. Denkbar sind daher bezüglich der Länge L ein Bereich von 15 cm bis 1 m oder 1,5 m, gegebenenfalls auch 2 m, in der Breite B ein Bereich von 15 cm oder 20 cm als Untergrenze bis zu 25, 30, 40 oder 50 cm als mögliche Obergrenzen. Für die Höhe H sind bevorzugte Bereiche mit Untergrenze 15 cm oder 20 cm und Obergrenzen 25, 30 oder 40 cm.

Verwendet wird die Pflanzenschutzvorrichtung, indem zunächst die vorgesehene Vertiefung im Erdboden oder der Pflanzfläche ausgehoben wird. Die Pflanzenschutzvorrichtung, wenn nicht vorgeformt, wird entsprechend der Vertiefung geformt. Die Vorrichtung wird in die Vertiefung eingesetzt. Pflanzsubstrat und Pflanzen bzw. Samen werden eingefüllt, und die ganze Anordnung durch weiteres Pflanzsubstrat oder anderes Material von aussen umgeben. Bevorzugt ragt dabei die Oberkante der Pflanzenschutzvorrichtung mind. ca. 1 cm über die Umgebung hervor, um sich oberirdisch fortbewegenden Schädlingen das Eindringen unmöglich zu machen.

Muss die Pflanzenschutzvorrichtung wieder entfernt werden, so kann dies einfacherweise unter Zerstörung erfolgen. In einer bevorzugten Ausführungsform weist die Pflanzenschutzvorrichtung jedoch eine derartige Stabilität auf, dass sie mit Inhalt aus der Pflanzfläche herausgehoben werden kann, wenigstens teilweise, um ihren Inhalt entnehmen und insbesondere ausschütten zu können.

Der Flächenanteil der Öffnungen 5 an der Gesamtfläche der jeweiligen Wände 2, 4, 7 ist genügend hoch, dass ein hinreichender Austausch von Wasser, anderen Substanzen und Luft mit dem Inneren des Pflanzenschutzkorbs möglich ist. Der Anteil der Gesamtfläche der Löcher ist daher bevorzugt mindestens 10 Prozent, weiter bevorzugt 25 Prozent, 40 Prozent oder 50 Prozent. Vorteilhaft an einer Vielzahl von Öffnungen ist auch, dass sich feine Wurzeln der Pflanzen durch sie hindurch in die Umgebung ausbreiten können.

Aus der vorangehenden Beschreibung von bevorzugten Ausführungen der erfindungsgemässen Pflanzenschutzvorrichtung sind dem Fachmann zahlreiche Abwandlungen und Ergänzungen zugänglich, ohne den Schutzbereich der Erfindung zu verlassen, der durch die Patentansprüche definiert ist. Denkbar ist:
- Mindestens eine Wand (incl. Boden) besteht aus einem Material ohne Öffnungen 5 mit der Einschränkung, dass mindestens eine Wand 2, 4, 7 aus einem Material mit Öffnungen 5 besteht.
- Mindestens 30 %, bevorzugt mind. 50 %, 75 % oder 90 % der Gesamtfläche von Wänden 2, 4, 7 besteht aus Material mit Öffnungen 5, möglicherweise aus verschiedenen solchen Materialien.

## Patentansprüche

1. Pflanzenschutzvorrichtung (1) zum Schutz von Pflanzen vor Schädlingen, **dadurch gekennzeichnet, dass** die Pflanzenschutzvorrichtung ein ein- oder mehrteiliger Korb ist, dessen Wände (2, 4, 7) einschliesslich eines Bodenabschnitts (7) zu wenigstens 50 % ihrer Gesamtfläche aus einem mit Öffnungen (5) versehenen flächigen Material bestehen, wobei die Öffnungen maximal 1 mm maximale Weite (d) aufweisen, um kleine Schädlinge wie Insekten zurückzuhalten, und der Korb oben eine Öffnung für das Einführen von Pflanze und Pflanzsubstrat aufweist.

2. Pflanzenschutzvorrichtung (1) gemäss Anspruch 1, **dadurch gekennzeichnet, dass** der Flächenanteil des mit Öffnungen versehenen Materials mindestens 75 %, mindestens 90 % oder etwa 100 % beträgt.

3. Pflanzenschutzvorrichtung (1) gemäss einem der Ansprüche 1 bis 2, **dadurch gekennzeichnet, dass** das flächige Material ein Netz aus mindestens einem von Metalldraht, Kunstmonofilament oder aus Draht und/oder Kunststoff hergestellten Fäden und/oder ein gelochtes flächiges Material aus Metall oder Kunststoff ist.

4. Pflanzenschutzvorrichtung (1) gemäss einem der Ansprüche 1 bis 3, **dadurch gekennzeichnet, dass** das Material eine Beständigkeit im Erdboden von mindestens drei Monaten, bevorzugt mindestens einem halben Jahr, weiter bevorzugt mindestens einem Jahr und insbesondere bevorzugt etwa einem Jahr aufweist, aber verrottend ist.

5. Pflanzenschutzvorrichtung gemäss einem der Ansprüche 1 bis 4, **dadurch gekennzeichnet, dass** die Vorrichtung eine Breite (B) und eine Länge (L) von mindestens 20 cm und eine Höhe (H) von mindestens 15 cm aufweist, so dass in der Breite, Länge und Tiefe der Wurzelballen eine Pflanze Platz findet.

6. Pflanzenschutzvorrichtung (1) gemäss Anspruch 5, **dadurch gekennzeichnet, dass** Breite und Länge in etwa gleich sind, bevorzugt ca. 20 cm aufweisen, um dem Wurzelballen einer einzelnen Pflanze mit Pflanzsubstrat Platz zu bieten.

7. Pflanzenschutzvorrichtung (1) gemäss Anspruch 5, **dadurch gekennzeichnet, dass** sie aus in einer Längsrichtung überlappend angeordneten, im Querschnitt im wesentlichen U-förmigen Teilen (22, 24) zusammengesetzt ist, wobei die jeweils ein Ende bildenden Teile (22) mit einer das Teil verschliessenden Endwand ausgestattet ist.

8. Pflanzenschutzvorrichtung (1) gemäss Anspruch 7, **dadurch gekennzeichnet, dass** mindestens eine Endwand aus dem Öffnungen aufweisenden Material besteht, bevorzugt alle Endwände.

9. Pflanzenschutzvorrichtung (1) gemäss einem der Ansprüche 1 bis 6, **dadurch gekennzeichnet, dass** sie am Rand der Öffnung Griffelemente (10, 12) wie Henkel aufweist, so dass die Pflanzenschutzvorrichtung besser angehoben werden kann.

10. Verfahren zum Schützen von Pflanzen vor Schädigung durch kleine Schädlinge, insbesondere Insekten einschliesslich deren Larven, die sich auch unter der Oberfläche von Pflanzsubstrat bewegen, **dadurch gekennzeichnet, dass** eine Pflanzenschutzvorrichtung (1) gemäss einem der Ansprüche 1 bis 9 in einer Pflanzfläche eingebettet wird, wobei die Kante der Öffnung der Pflanzenschutzvorrichtung mindestens 1 cm über die Oberfläche des umgebenden Pflanzsubstrats hervorsteht, um oberflächliches Eindringen von Schädlingen in die Pflanzenschutzvorrichtung zu vermeiden.
